# EUROPEAN PATENT SPECIFICATION

(11) **EP 2 027 410 B1**
(45) Date of publication and mention of the grant of the patent: **31.12.2014**
(21) Application number: 07735648.3
(22) Date of filing: 25.04.2007
(51) Int. Cl.: F21K 99/00, F21S 8/10, F21Y 101/02, F21V 29/00

(54) **AUTOMOTIVE LAMP MODULE AND LIGHTING UNIT WITH LED LIGHTING ELEMENT**
LAMPENMODUL FÜR EIN AUTOMOBIL UND BELEUCHTUNGSEINHEIT MIT LED-BELEUCHTUNGSELEMENT
MODULE LAMPE ET APPAREIL D'ECLAIRAGE AVEC ELEMENT D'ECLAIRAGE A DEL POUR AUTOMOBILE

(30) Priority: 23.05.2006 EP 06114376
(43) Date of publication of application: 25.02.2009
(73) Proprietor: Philips Intellectual Property & Standards GmbH, 20099 Hamburg (DE); Koninklijke Philips N.V., 5656 AE Eindhoven (NL)
(72) Inventor: WILLWOHL, Harald, NL-5656 AA Eindhoven (NL); PETERS, Ralph Hubert, NL-5656 AA Eindhoven (NL); WISKERKE, Pieter Johannes, NL-5656 AA Eindhoven (NL)
(74) Representative: Bekkers, Joost J.J.
(86) International application number: PCT/IB2007/051527
(87) International publication number: WO 2007/135579

(56) References cited:
- EP-A- 1 607 679
- EP-A1- 1 691 130
- FR-A- 2 895 784

## Description

The invention relates to lamp modules comprising an LED lighting element and lighting units including such lamp modules, especially for automotive use.

Due to their good efficiency and long service life, light emitting diodes (LEDs) are well suited especially for automotive use. However, standard packaging of LEDs will not suffice to provide secure and exact positioning as well as easy exchange and electrical connection for the various automotive lighting uses, such as headlights, tail-lights, turning indicators etc.. Lamp modules have been proposed comprising one or more LED lighting elements. Such modules are exchangeable at a reflector and provide means for positioning and locking the module at the reflector as well as a suitable electrical connector (e.g. plug).

Especially when using high power LEDs (in the present context, high power LEDs are understood to mean single LED lighting elements in excess of 1000 mW) thermal management needs, to be addressed. If the heat generated by the LED lighting element is not properly dissipated, the operating temperature of the LED lighting element may rise to a level where lighting output and service life decrease.

EP-A-1 353 120 describes a replaceable vehicle lamp assembly. A plurality of LEDs are mounted on a heat conductive post, joined to a heat sinking element exposed to exterior air. A base is made from plastic resin and comprises an electrical plug connection. A bayonet coupling with several arms is provided to mate in a reflector opening. In order to provide a good heat conductive path to dissipate the heat from the LED element, the post and respective lamp surfaces are formed from materials with high heat conductivities, such as copper, aluminum, zinc or other metals. The LED chip is mounted directly on the heat conductive structure.

However, it is also desirable for a lamp module to include driver electronics with active circuit elements for supplying electrical power to the LED element in a way well suited for the respective application.

Considering that often a plurality of such lamp modules will be needed, it is especially important that the construction of the lamp modules is compact (so that several modules may be arranged in proximity) and simple (so that production cost is minimal).

EP-A-1 691 130 describes a LED light source with a plastic housing and a light guide comprised in that housing. The light guide guides light, generated by LEDs positioned at a printed circuit board, outside the housing. The printed circuit board is positioned at the base of the housing. The housing is further provided with electrical connections for the circuit board and with positioning and locking means. The housing also functions as heat sink. The light distribution of this known light source is not optimal as the generated light has to be guitded through a light guide. Also the heat dissipation is not optimal due to the plastic material of the housing. Moreover the heat generated by the LED has to pass the heat sensitive printed circuit board before it may be dissipated by the housing. The known light source is also complicated and expensive.

It is an object of the invention to provide a less expensive module and lighting unit of compact and simple structure with optimal light distribution and heat dissipation.

This object is solved by a lamp module according to claim 1 and a lighting unit according to claim 8. Dependent claims refer to preferred embodiments.

The lamp module comprises an LED lighting element with a driver circuit, an electrical connector, positioning and locking means, and a metallic heat sink.

According to the invention, a metallic heat sink element is provided comprising at least one top wall and at least one side wall defining an inner cavity. An electronic driver circuit is connected for supplying electrical power to the LED element. The driver circuit is connected to the electrical connector. The driver circuit is located within the inner cavity of the heat sink element. In this way, a very compact design is achieved.

The LED element is located at the top wall of the heat sink element. It is in direct thermal contact with the heat sink element, i.e. directly mounted to it in a way ensuring good thermal connection. Thus, the heat sink element can efficiently dissipate the heat generated at the LED element.

The construction according to the invention provides great flexibility with respect to the electrical connection. By integrating an electronic driver circuit, any type of control of the lighting element may be efficiently effected. At the same time, the structure of the lamp module according to the invention remains simple and compact, because the driver circuit is received in the cavity of the heat sink.

The lighting unit according to the invention comprises a lamp module as described above. A reflector at which the module may be removably mounted is provided with a mounting cavity, where in the mounting position of the module the LED element is positioned. In this mounted position, the light emitted from the LED module is directed onto the reflector surface.

According to the invention, the module further comprises a plastic part. The electrical connector portion comprises a connector housing at least partly consisting of a plastic material. This part is fixed to the heat sink by least partly embedding the heat sink within the plastic material. During production, this may be achieved by injection molding the plastic part (at least partly) around the metallic heat sink element. This provides for cost-efficient, exact production and excellent mechanical connection of the two elements. Further, the positioning and locking means consist (at least partly) of a plastic material, and are provided as one plastic part together with the connector housing. In this way, there may be provided a single plastic part for both functionalities.

Preferably the positioning and locking means comprise a cylindrical member with radially projecting locking protrusions.

The LED lighting element of the module is preferably a high power LED (above 1000 mW). While there may be a plurality of LEDs present, it is preferred to only provide a single LED lighting element. Also, it is preferred that side emitter optics are provided, such that the light from the LED element is not emitted directly in the direction of the optical axis, but is directed in radial directions. Other spatial radiation patterns, such as lambertian emitters, are suitable as well.

Further preferred embodiments relate to the heat sink element. While different shapes including rectangular, trapezoid, irregular etc. are possible, it is preferred that the heat sink element has at least one cross-section that is essentially circular. Considering that it is desirable to achieve a compact design, a cross-section roughly corresponding to a circle provides a relatively large heat sink surface (important for dissipating heat) without a bulky design. Preferably the top wall and the side walls of the heat sink element are arranged at right angles. In a preferred embodiment, the heat sink element is cup-shaped.

According to a further preferred embodiment, the top wall (where the LED is located) and the side walls of the heat sink element are provided in one piece. This provides for easy assembly, stable mechanical properties and unobstructed heat conduction.

According to a preferred embodiment of the invention the heat sink element comprises at least two portions with different cross-section. A first portion comprises the top wall, where the LED element is located, a second portion is arranged further distant from the LED element. The first portion has a smaller cross-sectional area than the second portion. This helps to install the module in a reflector, where the smaller front part (first portion) near the LED does not take up much space while the broader back part of the heat sink (second portion) has sufficient surface to dissipate heat properly. In order to provide such portions of different cross-section, it is possible that the heat sink element has a tapered, e.g. conical shape, where the first portion would be the front tip and the second portions could be any cross-section further distant from the LED element. However, it is most preferred that the heat sink element comprises at least one step between the smaller first portion and the broader second portion. Both cross-sections are preferably essentially circular and preferably arranged coaxially.

There may be provided a cap on the heat sink for sealing the cavity. The cap is preferably also from metallic material, most preferably from the same material as the heat sink element. The cap also serves to dissipate heat and may be provided with a corresponding structure, e.g. pins, fins etc.. The cap may be clamped to the heat sink element. It is possible to provide different types of caps with different heat dissipating capabilities (e.g. without fins, with small fins and with larger fins). These different caps may be provided on otherwise identical heat sink elements to efficiently produce different modules suited for operation under different circumstances that necessitate different heat sinking capabilities (e.g. operating at different ambient temperatures).

The driver circuit may comprise any type of circuit devices. Preferably, it is provided as a circuit board, mostly preferably a printed circuit board. According to a preferred embodiment, the electronic driver can operate at least in two different modes where different time average levels of power are supplied to the LED element. Lower time average power is preferably supplied intermittently, e.g. by PWM modulation of the current supplied to the LED element.

The foregoing forms and other forms, features and advantages of the invention will become further apparent from the following detailed description of the presently preferred embodiment read in conjunction with the accompanying drawings.

The detailed descriptions and drawings are merely illustrative of the invention rather than limiting.
- Fig. 1: shows a perspective view of a first embodiment of a lamp module;
- Fig. 2: shows a perspective exploded view of the lamp module from Fig. 1;

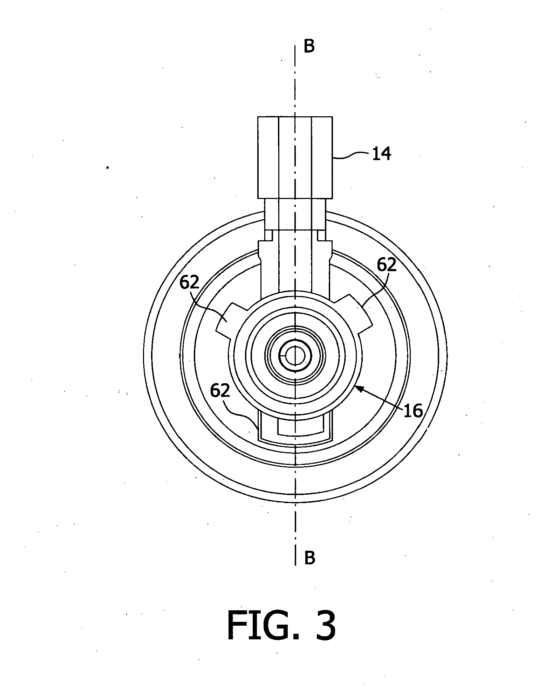

- Fig. 3: shows a top-view of the lamp module from Fig. 1, Fig. 2;
- Fig. 4: shows an exploded view of the lamp module from Fig. 3, with a section along line B..B;
- Fig. 5: shows a side-view of the assembled module from Fig. 3 with a section taken along line B..B in Fig. 3;
- Fig. 6: shows a perspective view of a module body of the first embodiment of a lamp module;
- Fig. 7: shows a perspective view of a second embodiment of a lamp module;
- Fig. 8: shows a side-view of abottom cap of the lamp module from Fig. 7;
- Fig. 9: shows a perspective view of a lamp module positioned in a reflector and
- Fig. 10: shows a side, sectional view of the lighting unit of fig. 9.

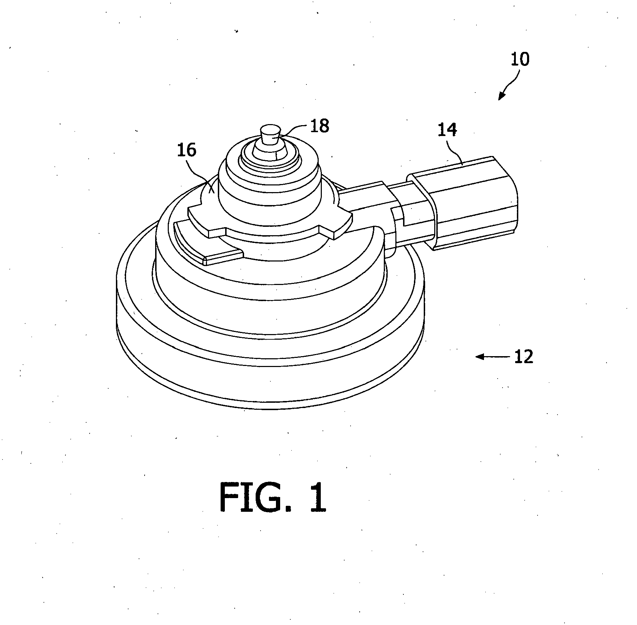

Fig. 1 shows a lamp module 10. The lamp module 10 consists of a module body 12 with a protruding plug housing 14, a locking part 16 for locking the lamp module 10 inside a reflector and a LED lighting element 18.

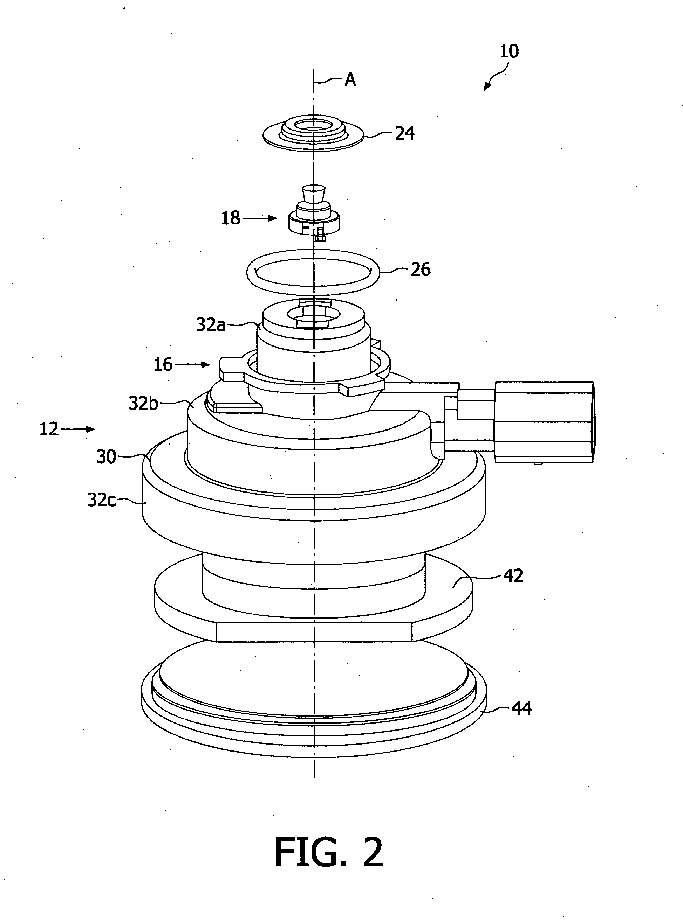

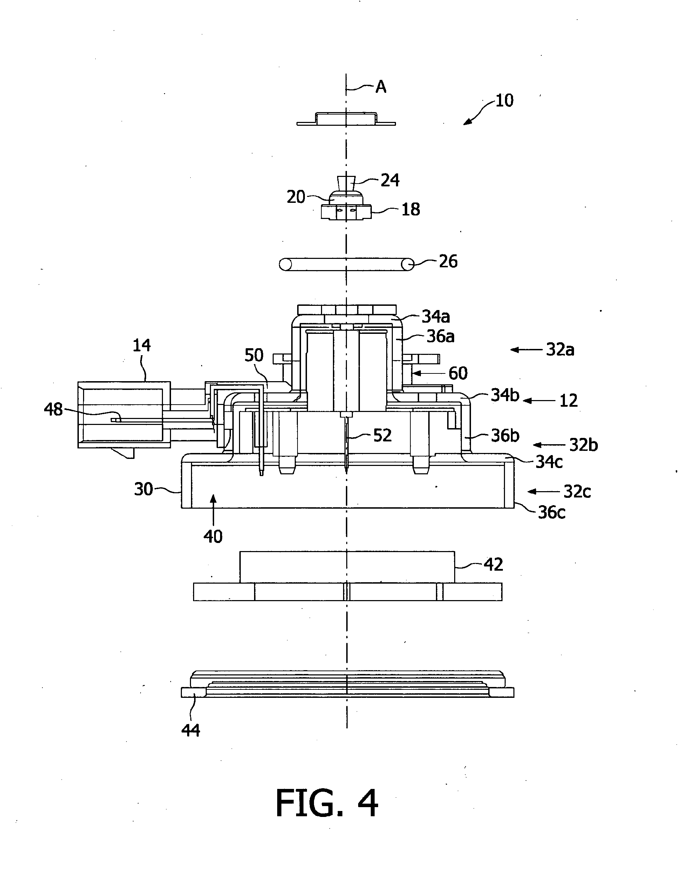

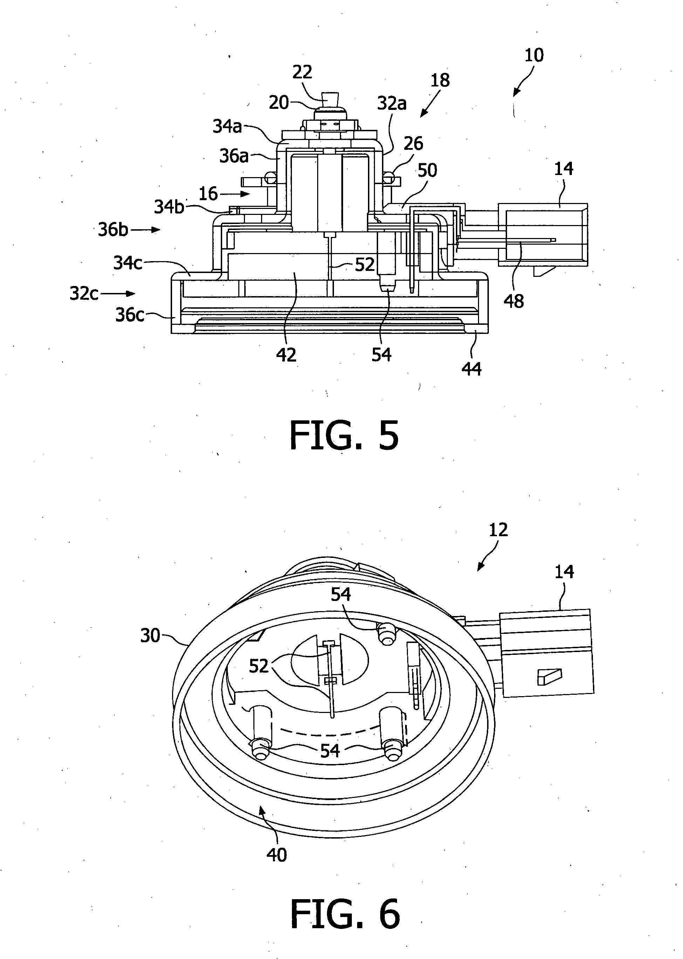

As shown in the exploded views of Fig. 2, Fig. 4, the LED module 10 is assembled in a stacked manner. The module body 12, which will be explained in detail below, has essentially circular cross-section, thus defining a central axis A. On top of the body 12, also centered to the axis A, the LED lighting element 18 is located. The LED element 18 comprises a LED 20 for generating light, and a side emitter reflector 22 (see Fig. 5) for reflecting the generated light such that it is directed in radial direction with regard to the central axis A, as will become apparent in the further description with regard to positioning of the lamp module 10 in a reflector.

A top cover 24 is provided over LED element 18 with a central hole from which LED 18 protrudes.

A gasket 26 is provided for sealing the connection of the lamp module 10 to a reflector, as will be explained later.

Asalsovisiblefromthesectionalviewsof Fig.4, Fig. 5 and the perspective view of fig. 6, the body 12 mainly consists of a cup-shaped aluminum part 30, which acts as a heat sink. The material may alternatively be another metal with good heat-conducting properties. The heat sink 30 is formed in one piece by deep drawing and comprises three cylindrical portions arranged coaxial to the axis A. A first portion 32a is located at the top of heat sink 30. The first portion 32a is cup-shaped with a radially arranged top wall 34a and a cylindrical side wall 36a arranged perpendicularly thereto. A second cylindrical portion 32b is arranged directly underneath the first portion 32a, again with a top wall 34b and cylindrical side wall 36b. The second cylindrical portion 32b is of larger diameter than the first portion 32a. In the same manner, the third portion 32c with top wall 34c and cylindrical side wall 36c of even further enlarged diameter is arranged directly below.

Comprised of these three sections 32a, 32b, 32c, the heat sink 30 defines an internal cavity 40. Within this cavity, a circuit board 42 is arranged. The circuit board 42 is of essentially circular cross-section with two portions of different diameter (with a small part of the larger diameter lower portion cut away, as shown in fig. 2). The circuit board 42 fits into the two lower sections 32b, 32c of the heat sink 30. As will be explained later, the circuit board 32 carries a driver circuit for the LED 18.

Towards its lower end, the heat sink 30 is closed off by a circular cap 44, which is also made from aluminum.

As explained above, the body part 12 comprises plastic parts - locking part 16 and plug housing 14 - fastened to the heat sink 30. These plastic parts are fixed to the heat sink 30 by molding in the aluminum heat sink. They are produced by injection molding, where the heat sink is inserted into the mold, so that the plastic parts are formed directly at the heat sink.

As is apparent from the sectional views of fig. 4,5, there are contact elements 48 protruding inside of plug housing 14. These contact elements are also molded in the plastic part formed at the heat sink 30. They run through holes 50 in top wall 34b of the heat sink and within the cavity 40 are contacted to the circuit board 42. Also, contact pins 52 run from LED 18 through holes in the top wall 34a of the heat sink 30 to the inside cavity 40 and are also contacted to the circuit board 42.

Inside the cavity 40, there are formed protruding plug elements 54, which are inserted into holes (not shown) in the circuit board 42 to ensure mechanical connection.

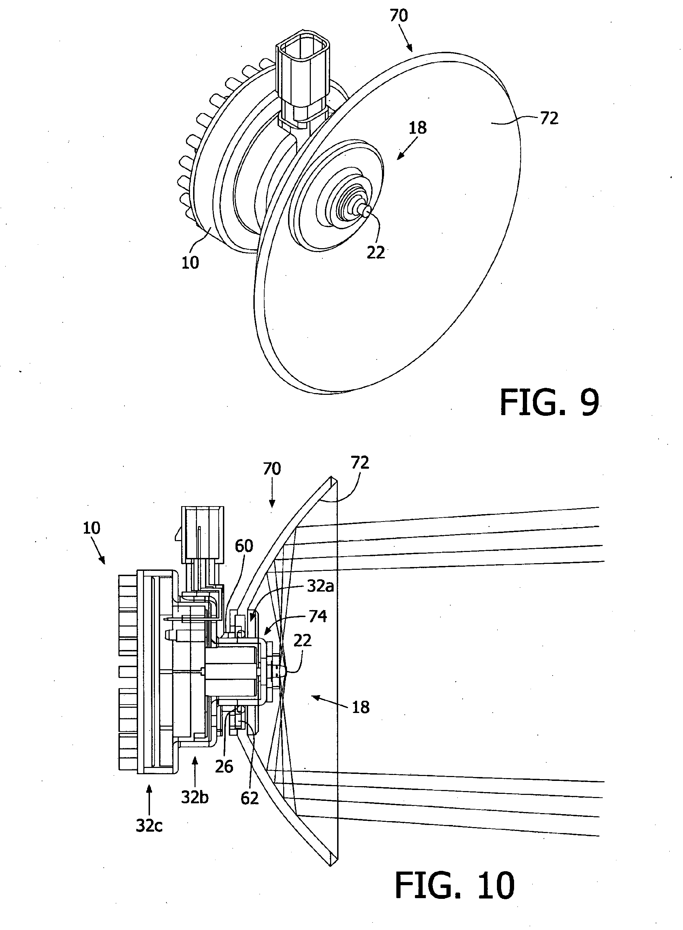

Further, the plastic part formed on the inside and outside of the cup-shaped heat sink 30 comprises the locking portion 16 with a cylindrical surface 60 which will serve for positioning of the lamp module 10 within a reflector, and three radially protruding flaps 62 (see Fig. 10). The flaps 62 serve as a bayonet coupling for axially fixing the lamp module 10 within a reflector.

In operation, the lamp module is inserted in a reflector as will be shown below. The contacts 48 of the plug 14 will be connected to electrical power. The driver circuit 42 will use the electrical power to operate the LED 18. The heat generated at LED 18 will be dissipated by heat sink 30. LED 18 is arranged directly on top of the first, smallest portion 32a. The LED element 18 is positioned directly at the end wall 34a thereof, and is fixed by heat conductive glue.

The heat generated in LED element 18 during operation will thus be efficiently transferred to heat sink 30 and evenly distributed therein due to good heat conducting properties of the aluminum material. From the large surface areas of the second portion 32b and especially the largest first portion 32c, the heat will radiate efficiently. Thus the heat is transferred away from the LED element 18.

Due to its large surface, the cap 44 will also play an important role in dissipating heat. In applications, where the ambient operating temperature can be expected to be sufficiently low, a cap 44 as shown in fig. 4 with a flat outer surface may be used.

Alternatively, if more efficient heat dissipation is required, e. g. due to elevated ambient temperature specifications, it is possible to provide heat-dissipating structures on cap 44.

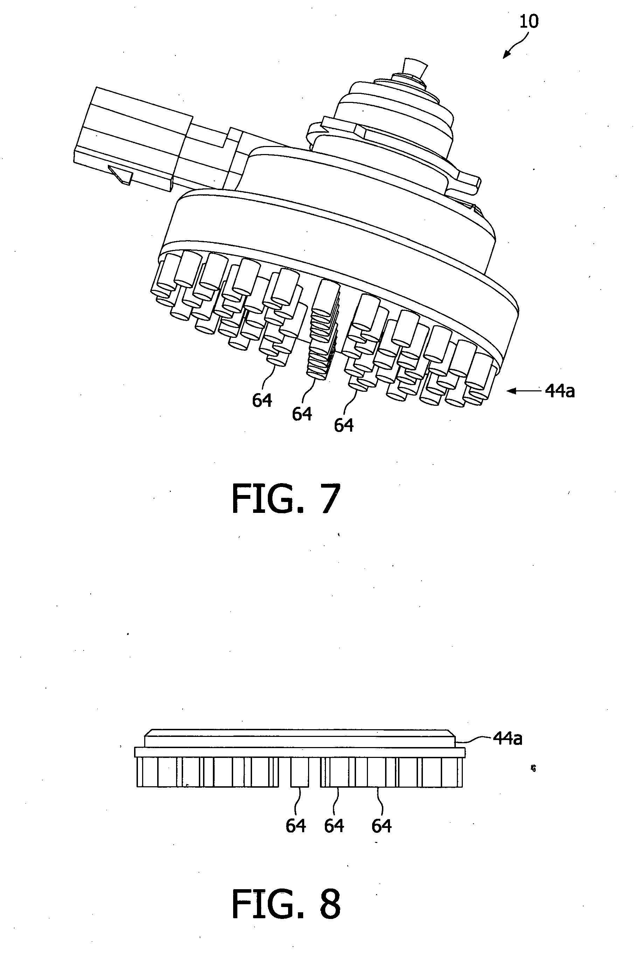

Fig. 7 shows a corresponding second embodiment of an otherwise identical lamp module 10. Here, a cap 44a (separately shown in fig. 8) is provided with a plurality of cylindrical protrusions 64. The cap 44a thus comprises an enlarged surface for more effective heat dissipation. As will be recognized by a skilled person, protrusions 64 may be shaped differently, e. g. as heat fins, to achieve the same effect.

Within plug housing 14, there are provided three electrical contacts 48. Thus, not only may electrical power be provided to the driver 42 and LED 18, but it is also possible to convey commands to control operation of LED 18. In a presently preferred embodiment, a first of the three contacts acts as common electrical ground connection. The remaining two may be selectively powered with the respective onboard operating voltage of the automobile. If this voltage is supplied to one of the contacts, LED 18 is operated at full power, whereas LED 18 is only operated at a reduced power level if operating voltage is supplied to the other contact. Alternatively, there may be more than three contacts 48 present. For example, a further contact may be used as a signal detection line. Thus, status information, such as failure information detected in the driver circuit 42 may be transmitted.

For full power operation, driver circuit 42 supplies an operating current through connections 52 to the LED 18 so that LED 18 is operated at its respective nominal values. Driver circuit 42 comprises corresponding circuitry to convert the onboard operating voltage applied at plug 14 to the electrical values needed for operation of LED 18. For the implementation of the driver circuit 42, various driver principles may be used. For example, a current source driver, or alternatively a switching converter may be implemented.

Details of such LED driver circuits are known to the skilled person and will therefor not be described in further detail. The driver 42 is a printed circuit board with SMD components, both discrete parts and integrated circuits (not shown in the drawings). Alternatively, it is also possible to provide the driver 42 with only a few, or even only one specialized integrated driver circuit.

For operation at reduced power, circuit 42 comprises a PWM driver to supply the nominal operating current to LED 18 only intermittently. At a fixed switching frequency and with predetermined duty cycle, the LED 18 is consecutively turned on and off so that the time average power is at a predetermined lower level compared to full operation. Such PWM drivers are also known to the skilled person and will therefor not be further explained in detail. Alternatively, it is also possible to use linear current dimming for the reduced power mode.

In terms of electrical connection, therefore, the module 10 may behave exactly like a two-filament standard automotive lamp, where different operating levels for different lighting purposes may be used by simply connecting the full onboard voltage, without any further electronic driver means, to the respective contacts 48.

Figs. 9, 10 show module 10 mounted in a reflector 70. Reflector 70 comprises a reflector surface 72 and a mounting cavity 74 for mounting the module 10. As visible in fig. 10, locking protrusions 62 are locked inside the mounting cavity 74. Cylindrical part 60 serves to position the module 10 within the mounting cavity 74. The gasket 26 is arranged for sealing the connection between the module 10 and the reflector 70. The LED 18 with side emitter reflector 22 protrudes through a hole in the reflector surface 72.

As exemplary shown for some beams in fig. 10, light emitted from LED 18 is directed by side emitter reflector 22 in radial directions and is reflected by reflector surface 72. Reflector surface 72 is shaped to achieve a desired light distribution.

While the first portion 32a of the heat sink 30, which is of smaller diameter, is received within mounting cavity 74, the larger bottom portions 32b and especially 32c are arranged outside of mounting cavity 74, so that they can freely dissipate heat. The whole construction is very compact, so that a plurality of such lighting units comprising reflector 70 and a module 10 may be arranged next to each other. Yet, efficient heat dissipation is provided.

## Claims

1. Lamp module comprising
- an LED lighting element (18),
- an electronic driver circuit (42), connected for supplying electrical power to said LED element (18),
- an electrical connector (48), connected to said electronic driver circuit (42),
- a connector housing (14) provided at said electrical connector (48), said connector housing (14) at least partly consisting of a plastic material,
- positioning and locking means (16) for positioning and removably locking said module within a reflector (70), said connector housing (14) at least partly consisting of a plastic material
- a heat sink element (30) with at least one top wall (34a, 34b, 34c) and at least one side wall (36a, 36b, 36c) defining an inner cavity (40),
- where said electronic driver circuit (42) is located within said cavity (40), **characterized in that**
- the heat sink is metallic,
- the LED element (18) is located at said top wall (34a) in direct thermal contact to said heat sink element (30),
- the positioning and locking means (16) and the connector housing (14) are provided as one part, and
- the heat sink element (30) is at least partly embedded in the plastic material of that one part.

2. Module according to claim 1, where
- said heat sink element (30) has at least one essentially circular cross-section.

3. Module according to one of the above claims, where
- said heat sink element (30) comprises said top wall (34a, 34b, 34c) and said side wall (36a, 36b, 36c) in one piece.

4. Module according to one of the above claims, where
- said heat sink element (30) comprises at least a first portion (32a) and a second portion (32b),
- where said LED element (18) is arranged at said first portion (32a),
- and said second portion (32b) is spaced from said LED element (18) at least by said first portion (32a),
- where said first portion (32a) has a smaller cross-section than said second portion (32b).

5. Module according to one of the above claims, where
- a cap (44, 44a) is provided on said heat sink element (30) for sealing said cavity (40).

6. Module according to one of the above claims, where
- the electronic driver circuit (42) is designed to operate in at least a first and a second mode,
- where at least in said first mode electrical power is supplied intermittently to said LED element (18), such that the time average power in said first mode is less than the time average power supplied in said second mode.

7. Module according to one of the above claims, where
- said LED element (18) is provided defining an optical axis (A),
- said module further comprising side emitter optics (22) provided at said LED element to direct light emitted from said LED element (18) in a plurality of radial directions with regard to said optical axis (A).

8. Lighting unit comprising
- at least one lamp module (10) according to one of the proceeding claims,
- and a reflector (70) with a reflector surface (72),
- where said module (10) is mounted such that the light emitted from said LED lighting element (18) is reflected by said reflector surface(72).

## Patentansprüche

1. Lampenmodul mit
- einem LED-Beleuchtungselement (18),
- einer elektronischen Treiberschaltung (42), die so geschaltet ist, dass sie dem LED-Element (18) elektrische Leistung zuführt,
- einem elektrischen Steckverbinder (48), der mit der elektronischen Treiberschaltung (42) verbunden ist,
- einem Steckverbindergehäuse (14), das an dem elektrischen Steckverbinder (48) vorgesehen ist, wobei das Steckverbindergehäuse (14) zumindest teilweise aus einem Kunststoffmaterial besteht,
- Positionier- und Arretiermitteln (16) zum Positionieren und lösbaren Arretieren des Moduls innerhalb eines Reflektors (70), wobei das Steckverbindergehäuse (14) zumindest teilweise aus einem Kunststoffmaterial besteht,
- einem Kühlelement (30) mit mindestens einer oberen Wand (34a, 34b, 34c) und mindestens einer Seitenwand (36a, 36b, 36c), die einen Innenhohlraum (40) definieren,
- wobei die elektronische Treiberschaltung (42) innerhalb des Hohlraumes (40) positioniert ist,
**dadurch gekennzeichnet, dass**
- das Kühlelement metallisch ist,
- das LED-Element (18) an der oberen Wand (34a) in direktem thermischem Kontakt mit dem Kühlelement (30) angeordnet ist,
- die Positionier- und Arretiermittel (16) sowie das Steckverbindergehäuse (14) als ein Teil vorgesehen sind, und
- das Kühlelement (30) zumindest teilweise in dem Kunststoffmaterial dieses einen Teils eingebettet ist.

2. Modul nach Anspruch 1, wobei
- das Kühlelement (30) mindestens einen im Wesentlichen kreisförmigen Querschnitt aufweist.

3. Modul nach einem der vorangegangenen Ansprüche, wobei
- das Kühlelement (30) die obere Wand (34a, 34b, 34c) und die Seitenwand (36a, 36b, 36c) in einem Stück umfasst.

4. Modul nach einem der vorangegangenen Ansprüche, wobei
- das Kühlelement (30) zumindest einen ersten Teil (32a) und einen zweiten Teil (32b) umfasst,
- wobei das LED-Element (18) an dem ersten Teil (32a) angeordnet ist,
- und wobei der zweite Teil (32b) von dem LED-Element (18) zumindest durch den ersten Teil (32a) beabstandet ist,
- wobei der erste Teil (32a) einen kleineren Querschnitt als der zweite Teil (32b) aufweist.

5. Modul nach einem der vorangegangenen Ansprüche, wobei
- eine Abdeckung (44, 44a) auf dem Kühlelement (30) vorgesehen ist, um den Hohlraum (40) dicht zu verschließen.

6. Modul nach einem der vorangegangenen Ansprüche, wobei
- die elektronische Treiberschaltung (42) so ausgeführt ist, dass sie in zumindest einem ersten und einem zweiten Modus arbeitet,
- wobei zumindest in dem ersten Modus dem LED-Element (18) elektrische Leistung intermittierend zugeführt wird, so dass die Leistung im Zeitmittel in dem ersten Modus geringer als die in dem zweiten Modus zugeführte Leistung im Zeitmittel ist.

7. Modul nach einem der vorangegangenen Ansprüche, wobei
- das LED-Element (18) eine optische Achse (A) definierend vorgesehen ist,
- wobei das Modul weiterhin eine an dem LED-Element vorgesehene Side-Emitter-Optik (22) umfasst, um von dem LED-Element (18) emittiertes Licht in mehrere radiale Richtungen gegenüber der optischen Achse (A) zu lenken.

8. Beleuchtungseinheit mit:
- mindestens einem Lampenmodul (10) nach einem der vorangegangenen Ansprüche
- sowie einem Reflektor (70) mit einer Reflektoroberfläche (72),
- wobei das Modul (10) so angebracht ist, dass das von dem LED-Beleuchtungselement (18) emittierte Licht von der Reflektoroberfläche (72) reflektiert wird.

## Revendications

1. Module à lampe, comprenant :
- un élément d'éclairage à LED (18),
- un circuit conducteur électronique (42), connecté pour fournir de l'énergie électrique audit élément à LED (18),
- un connecteur électrique (48), connecté audit circuit conducteur électronique (42),
- un logement de connecteur (14) prévu sur ledit connecteur électrique (48), ledit logement de connecteur (14) étant au moins partiellement constitué d'une matière plastique,
- des moyens de positionnement et de verrouillage (16) pour positionner et verrouiller de façon amovible ledit module à l'intérieur d'un réflecteur (70), ledit logement de connecteur (14) étant au moins partiellement constitué d'une matière plastique,
- un élément dissipateur thermique (30) avec au moins une paroi supérieure (34a, 34b, 34c) et au moins une paroi latérale (36a, 36b, 36c) définissant une cavité intérieure (40),
- dans lequel ledit circuit conducteur électronique (42) est situé à l'intérieur de ladite cavité (40),
**caractérisé en ce que**
- le dissipateur thermique est métallique,
- l'élément à LED (18) est situé sur ladite paroi supérieure (34a) en contact thermique direct avec ledit élément dissipateur thermique (30),
- les moyens de positionnement et de verrouillage (16) et le logement de connecteur (14) sont prévus sous forme monobloc, et
- l'élément dissipateur thermique (30) est au moins partiellement encastré dans la matière plastique de ce monobloc.

2. Module selon la revendication 1, dans lequel
- ledit élément dissipateur thermique (30) possède au moins une section transversale essentiellement circulaire.

3. Module selon une des revendications précédentes, dans lequel
- ledit élément dissipateur thermique (30) comprend ladite paroi supérieure (34a, 34b, 34c) et ladite paroi latérale (36a, 36b, 36c) de façon monobloc.

4. Module selon une des revendications précédentes, dans lequel
- ledit élément dissipateur thermique (30) comprend au moins une première portion (32a) et une seconde portion (32b),
- dans lequel ledit élément à LED (18) est agencé dans ladite première portion (32a), et
- ladite seconde portion (32b) est espacée dudit élément à LED (18) au moins par ladite première portion (32a),
- dans lequel ladite première portion (32a) possède une section transversale plus petite que ladite seconde portion (32b).

5. Module selon une des revendications précédentes, dans lequel
- un culot (44, 44a) est prévu sur ledit élément dissipateur thermique (30) pour fermer ladite cavité (40) de façon hermétique.

6. Module selon une des revendications précédentes, dans lequel
- le circuit conducteur électronique (42) est conçu pour fonctionner dans au moins des premier et second modes,
- dans lequel, au moins dans ledit premier mode, de l'énergie électrique est fournie de façon intermittente audit élément à LED (18), de sorte que la moyenne temporelle d'énergie électrique dans ledit premier mode soit inférieure à la moyenne temporelle d'énergie électrique fournie dans ledit second mode.

7. Module selon une des revendications précédentes,
- dans lequel ledit élément à LED (18) est prévu, définissant un axe optique (A),
- ledit module comprenant en outre des optiques émetteurs latéraux (22) prévus sur ledit élément à LED pour diriger ladite lumière émise à partir dudit élément à LED (18) dans une pluralité de directions radiales par rapport audit axe optique (A).

8. Unité d'éclairage, comprenant :
- au moins un module à lampe (10) selon une des revendications précédentes,
- et un réflecteur (70) avec une surface de réflecteur (72),
- dans laquelle ledit module (10) est monté de sorte que la lumière émise à partir dudit élément d'éclairage à LED (18) soit réfléchie par ladite surface de réflecteur (72).
